# FASCICULE DE BREVET EUROPEEN

(11) **EP 4 335 742 B1**
(45) Date de publication et mention de la délivrance du brevet: **11.06.2025**
(21) Numéro de dépôt: 23194907.4
(22) Date de dépôt: 01.09.2023
(51) Int. Cl.: B64C 1/14

(54) **PORTE DE FUSELAGE D'AÉRONEF COMPORTANT UN PANNEAU INTERNE ET UN PANNEAU EXTERNE, ET PARTIE DE FUSELAGE D'AÉRONEF COMPRENANT UNE TELLE PORTE**
FLUGZEUGRUMPFTÜR MIT INNENPLATTE UND AUSSENPANEEL SOWIE FLUGZEUGRUMPFTEIL MIT SOLCH EINER TÜR
AIRCRAFT FUSELAGE DOOR COMPRISING AN INNER PANEL AND AN OUTER PANEL, AND AIRCRAFT FUSELAGE PART COMPRISING SUCH A DOOR

(30) Priorité: 09.09.2022 FR 2209038
(43) Date de publication de la demande: 13.03.2024
(73) Titulaire: AIRBUS OPERATIONS (SAS), 31060 Toulouse (FR)
(72) Inventeur: LIEVEN, Patrick, 31060 TOULOUSE (FR)
(74) Mandataire: Gevers & Orès

(56) Documents cités:
- EP-B1- 2 819 919
- GB-A- 868 390
- US-A- 5 251 851
- US-B2- 7 578 477

## Description

### Domaine technique

La présente invention concerne une porte de fuselage d'aéronef comportant un panneau externe lié élastiquement à un panneau interne mobile, et une partie de fuselage d'un aéronef comprenant une telle porte.

### Etat de la technique

EP 2 819 919 B1 décrit une porte de fuselage d'aéronef.

On sait que les portes de fuselage d'un aéronef, par exemple d'un avion de transport, qui permettent d'accéder à l'intérieur de l'aéronef sont des éléments importants soumis à un cahier des charges très strict. En effet, de telles portes doivent remplir plusieurs fonctions essentielles et satisfaire de nombreux critères, notamment pour des raisons de sécurité.

D'une part, les portes de fuselage doivent assurer l'étanchéité entre l'intérieur et l'extérieur de l'aéronef de manière à permettre la pressurisation de la cabine des passagers. D'autre part, elles doivent assurer une fonction aérodynamique. Pour ce faire, leur surface extérieure doit se confondre parfaitement avec la surface extérieure de l'aéronef de sorte que le fuselage soit aérodynamique au niveau de la porte, à savoir notamment lisse et sans ouvertures.

Cependant, les portes d'aéronef étant soumises à la pressurisation de la cabine, elles peuvent se déformer et/ou bouger légèrement par rapport à leur encadrement. De plus, les portes sont des éléments avec une cinématique et des chaînes de tolérances complexes. Pour ces raisons, il est nécessaire de prévoir des jeux de fonctionnement. Ces jeux de fonctionnement se manifestent généralement sous la forme d'un interstice entre le bord périphérique des portes de fuselage au niveau de leur face externe et le fuselage. L'écoulement d'air le long du fuselage peut être perturbé par cet interstice, ce qui peut entraîner une diminution des performances aérodynamique de l'aéronef, notamment en augmentant la traînée.

Une telle situation n'est donc pas complètement satisfaisante.

### Exposé de l'invention

Un objectif de la présente invention est de proposer une solution pour remédier à l'inconvénient précité.

La présente invention concerne une porte de fuselage d'un aéronef comportant un panneau interne mobile destiné à être soumis à une pressurisation.

Selon l'invention, la porte comporte, de plus, un panneau externe aérodynamique, ledit panneau externe étant agencé sur une face dite externe dudit panneau interne en couvrant la surface de ladite face externe et étant lié élastiquement audit panneau interne de manière à former un espace interne libre entre eux, le panneau interne étant apte à être déplacé relativement au panneau externe.

Dans le cadre de la présente invention :
- les termes « externe » ou « extérieur » s'appliquent à un élément qui est situé à l'extérieur de l'aéronef AC ou vers l'extérieur de l'aéronef AC ; et
- les termes « interne » ou « intérieur » s'appliquent à un élément qui est situé à l'intérieur de l'aéronef AC ou vers l'intérieur de l'aéronef AC.

Ainsi, grâce à l'invention, on dispose d'une porte de fuselage qui est pourvue de deux éléments différents, le panneau interne et le panneau externe, qui mettent en œuvre des fonctions différentes. Le panneau externe permet d'assurer une fonction aérodynamique et le panneau interne permet d'assurer des fonctions de pressurisation et d'ouverture et de fermeture de la porte. De plus, la liaison élastique entre eux permet un (léger) mouvement du panneau interne sans générer de mouvement du panneau externe. La porte peut ainsi être réalisée avec un jeu entre sa périphérie et le fuselage, qui est réduit. En conséquence, la traînée au niveau de la surface externe de la porte est réduite et les performances aérodynamiques de l'aéronef sont améliorées.

Avantageusement, la porte comporte au moins une pluralité d'éléments élastiques agencés entre le panneau externe et le panneau interne, lesdits éléments élastiques étant aptes à lier élastiquement ledit panneau externe audit panneau interne.

De plus, de façon avantageuse, le panneau externe et le panneau interne présentent, chacun, une forme sensiblement rectangulaire et la porte comporte au moins quatre éléments élastiques agencés respectivement aux quatre coins de ladite forme rectangulaire du panneau externe et du panneau interne.

Dans un mode de réalisation préféré, les éléments élastiques correspondent à des ressorts à lame.

Par ailleurs, de façon avantageuse, le panneau interne est apte à être déplacé relativement au panneau externe pour être approché ou écarté dudit panneau externe, ledit panneau interne étant apte à :
- pousser le panneau externe lorsqu'il est approché dudit panneau externe, en venant, au moins en partie, au contact dudit panneau externe ; et
- tirer le panneau externe avec lui lorsqu'il est écarté dudit panneau externe.

De plus, avantageusement, le panneau externe est pourvu d'au moins une trappe d'accès destinée à permettre d'accéder au panneau interne.

La présente invention concerne également une partie de fuselage d'aéronef. Selon l'invention, la partie de fuselage comporte au moins une porte telle que décrite ci-dessus et un encadrement de porte recevant ladite porte.

Avantageusement, le panneau externe comporte au moins une pièce de centrage agencée sur au moins une partie de la périphérie dudit panneau externe, ladite pièce de centrage comprenant une face dite de contact configurée pour coopérer avec une face dite complémentaire de l'encadrement, ladite face de contact étant destinée à venir au contact de ladite face complémentaire lorsque la porte est dans une position fermée.

En outre, de façon avantageuse, la face de contact de la pièce de centrage et la face complémentaire de l'encadrement sont configurées de sorte que le contact entre ladite face de contact et ladite face complémentaire corresponde à un contact tronconique.

Par ailleurs, avantageusement, le panneau interne de la porte comporte au moins un joint agencé sur la périphérie dudit panneau interne, ledit joint étant apte à venir au contact d'un bord de l'encadrement lorsque la porte est dans une position fermée.

De plus, avantageusement, la porte comporte une pluralité de loquets aptes à verrouiller ou à libérer un déplacement du panneau interne par rapport audit encadrement lorsque la porte est dans une position fermée.

La présente invention concerne également un aéronef. Selon l'invention, l'aéronef comporte au moins une porte et/ou au moins une partie de fuselage telles que celles décrites ci-dessus.

### Brève description des figures

Les figures annexées feront bien comprendre comment l'invention peut être réalisée. Sur ces figures, des références identiques désignent des éléments semblables.
La figure 1 est une vue partielle, en perspective, d'une partie d'un fuselage d'aéronef, pourvue d'un encadrement de porte et d'une porte selon un mode de réalisation particulier de l'invention.
La figure 2 est une vue, en perspective, d'une partie de l'encadrement de porte et de la porte de la figure 1, vus de l'intérieur de l'aéronef.
La figure 3 est une coupe transversale de l'encadrement de porte et de la porte et de la porte, selon une ligne de coupe A-A de la figure 2.
La figure 4 est une vue agrandie d'une partie de la figure 3.
La figure 5 est une vue en coupe d'une zone de liaison entre un panneau interne et un panneau externe d'une porte pourvu d'un ressort à lame selon un mode de réalisation particulier.
La figure 6A est une vue schématique, en coupe transversale, d'une partie de fuselage d'aéronef pourvue d'un encadrement de porte et d'une porte, dans une position fermée de la porte, la porte étant verrouillée.
La figure 6B est une vue similaire à celle de la figure 6A dans la position fermée de la porte, la porte étant déverrouillée.
La figure 6C est une vue similaire à celle des figures 6A et 6B, dans une position d'ouverture de la porte.
La figure 6D est une vue similaire à celle des figures 6A, 6B et 6C, dans une position ouverte de la porte.

### Description détaillée

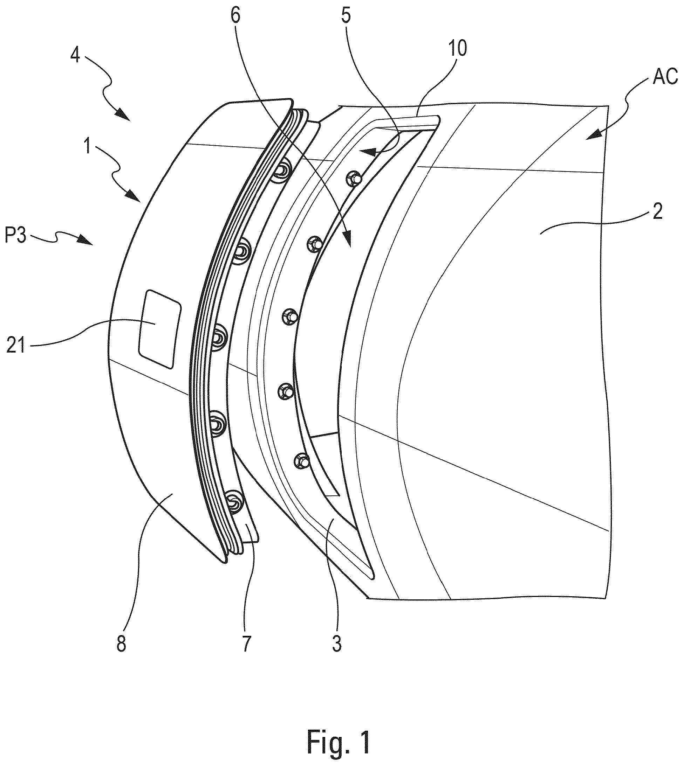

La porte 1 permettant d'illustrer l'invention est représentée dans des modes de réalisation particuliers de la figure 1 à la figure 6D. La porte 1 correspond à une porte agencée dans un fuselage 2 d'un aéronef AC. L'aéronef AC, par exemple un avion de transport, dont une partie de fuselage 4 est représentée partiellement sur la figure 1, comporte des portes telles que la porte 1 permettant d'accéder à l'intérieur dudit aéronef AC depuis l'extérieur, et inversement. De manière non limitative, la porte 1 peut correspondre à tout type de porte du fuselage 2 de l'aéronef AC, et notamment à une porte de cabine de passagers, à une porte de secours ou à une porte de soute.

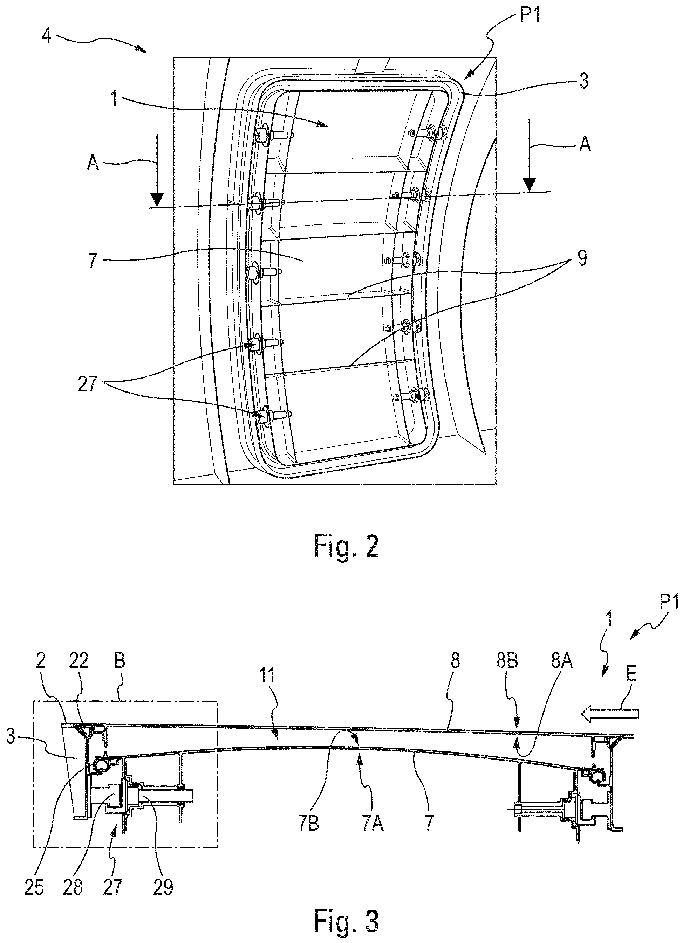

Comme représenté sur la figure 1 et la figure 2, la porte 1 est montée dans un encadrement de porte 3 (ci-après « encadrement ») du fuselage 2. L'encadrement 3 est intégré dans la partie de fuselage 4 qui sera décrite plus en détail dans la suite de la description. L'encadrement 3 comprend, notamment, une surface 5 délimitant la périphérie d'une ouverture 6 traversant ledit encadrement 3. L'ouverture 6 permet une communication entre l'intérieur et l'extérieur de l'aéronef AC. De plus, la porte 1 est configurée pour pouvoir ouvrir ou fermer l'ouverture 6, respectivement en étant écartée ou mise au contact de l'encadrement 3. Pour ce faire, la porte 1 est liée à l'encadrement 3 par un mécanisme d'ouverture et de fermeture usuel (non représenté).

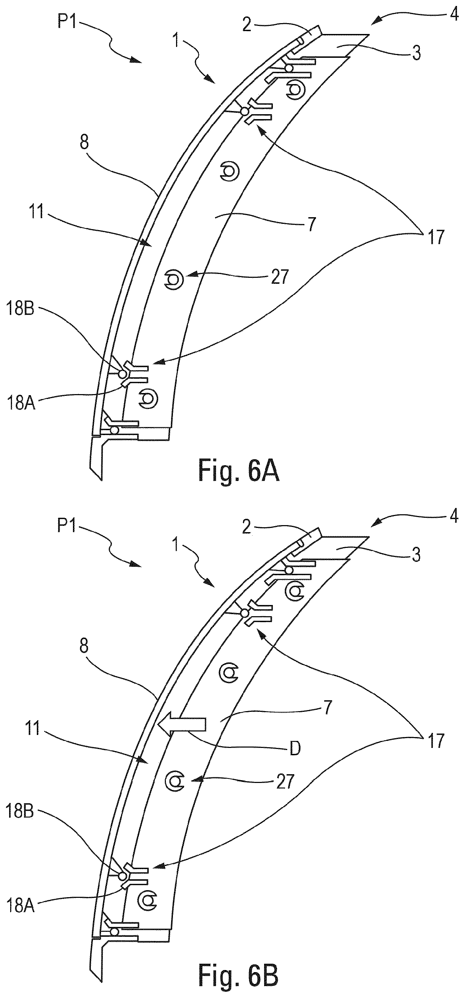

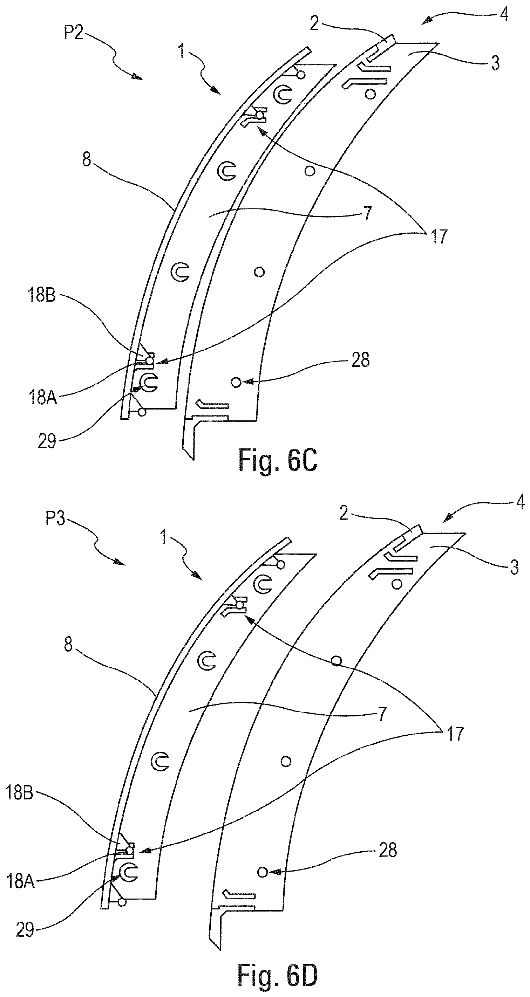

Dans le cadre de la présente invention :
- la porte 1 est dite « fermée » lorsqu'elle est dans une position fermée P1 (figure 6A et figure 6B) dans laquelle elle est au contact de l'encadrement 3, sur lequel elle est être installée, de manière à obstruer complètement l'ouverture 6 dudit encadrement 3 ;
- la porte 1 est dite « ouverte » lorsqu'elle est dans une position ouverte P3 (figure 6D) dans laquelle elle est écartée de l'encadrement 3, sur lequel elle est installée, de manière à libérer l'ouverture 6 dudit encadrement 3 ; et
- la porte 1 est dite « partiellement ouverte » lorsqu'elle est dans une position d'ouverture P2 (figure 6C) correspondant à une position intermédiaire entre la position fermée P1 et la position ouverte P3.

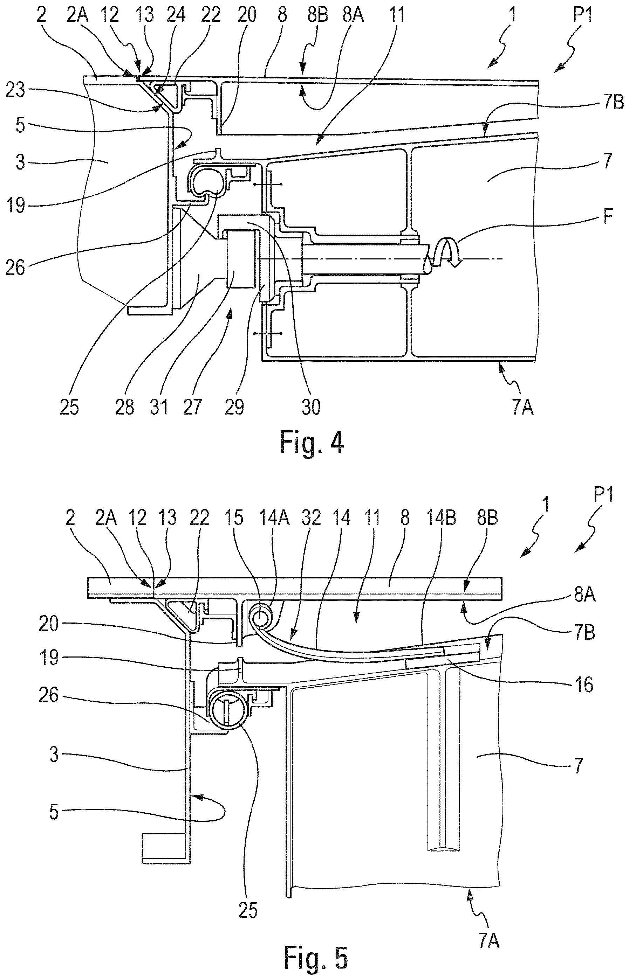

La porte 1 comporte un panneau interne 7 agencé au niveau d'une partie interne de la porte 1, à savoir la partie qui est destinée à être orientée vers l'intérieur de l'aéronef AC. Comme représenté, notamment, sur la figure 3 et la figure 4, le panneau interne 7 comprend une face 7A interne et une face 7B externe.

Par « panneau », on entend un élément de structure en forme de plaque pouvant présenter une grande variété d'épaisseurs. Il peut s'agir d'une plaque telle qu'une tôle ou d'une structure plus épaisse de type « panneau sandwich ». De préférence, il s'agit d'un élément présentant une forme générale courbe correspondant sensiblement à la courbure du fuselage 2 et plus précisément une forme en double courbure favorable à l'effet de pressurisation.

Dans un mode de réalisation particulier représenté sur la figure 2, le panneau interne 7 comporte sur sa face 7A interne des raidisseurs 9 aptes à rigidifier ledit panneau interne 7. Le panneau interne 7 ainsi rigidifié peut comprendre des parties creuses configurées pour recevoir des éléments usuels (non représentés), par exemple des éléments de garniture ou des mécanismes usuels de porte d'aéronef. De préférence, le panneau interne 7 est réalisé dans un matériau métallique. Toutefois, il peut être réalisé dans des matériaux variés. De manière non limitative, le panneau interne 7 présente une épaisseur comprise entre 100 mm et 200 mm, et par exemple une épaisseur de l'ordre de 120 mm.

Par ailleurs, le panneau interne 7 est mobile par rapport à l'encadrement 3. Il est configuré pour être logé dans l'ouverture 6 de l'encadrement 3 lorsque la porte 1 est fermée. Le panneau interne 7 comporte notamment le mécanisme de déplacement usuel (non représenté) de la porte 1 permettant d'ouvrir et de fermer ladite porte 1. De plus, lorsque la porte 1 est fermée, le panneau interne 7 est configuré pour venir au contact de l'encadrement 3 de sorte que ledit panneau interne 7 puisse subir une pressurisation. Cette pressurisation correspond à une mise en pression usuelle de l'intérieur de l'aéronef AC, à savoir notamment de la cabine des passagers et du poste de pilotage.

La porte 1 comporte également un panneau externe 8 agencé sur le panneau interne 7. Le panneau externe 8 est configuré pour être logé dans un logement 10 de l'encadrement 3 lorsque la porte 1 est fermée. Ce panneau externe 8 présente une fonction aérodynamique. Il est destiné à être soumis à un écoulement d'air, représenté par une flèche E sur la figure 3, s'écoulant à l'extérieur de l'aéronef AC le long du fuselage 2 lorsque la porte 1 est fermée. Le panneau externe 8 présente, vers l'extérieur, une forme correspondant à la forme courbe du fuselage 2 de manière à ne pas s'opposer audit écoulement d'air. Ainsi, lorsque la porte 1 est fermée, la surface externe du panneau externe 8 affleure le fuselage 2 de sorte que la surface externe de l'aéronef AC est lisse et aérodynamique.

Comme représenté de la figure 3 à la figure 5, le panneau externe 8 comporte une face 8A interne et une face 8B externe. La face 8A interne est agencée en regard de la face 7B externe du panneau interne 7 de manière à couvrir la surface de ladite face 7B. La face 8B, quant à elle, est destinée à être soumise à l'écoulement d'air et présente une forme aérodynamique comme décrit ci-dessus. Le panneau externe 8 est réalisé de préférence dans un matériau métallique, par exemple en aluminium. Toutefois, il peut être réalisé dans des matériaux variés. De manière non limitative, il présente une épaisseur comprise entre 20 mm et 30 mm, et par exemple une épaisseur de l'ordre de 25 mm.

En outre, le panneau externe 8 est lié élastiquement au panneau interne 7 de manière à former un espace dit libre 11 entre les deux panneaux. Comme représenté de la figure 3 à la figure 5, l'espace libre 11 est compris entre la face 7B externe du panneau interne 3 et la face 8A interne du panneau externe 8. Cet espace libre 11 permet des mouvements relatifs entre le panneau interne 7 et le panneau externe 8. Plus précisément, l'espace libre 11 est prévu pour permettre un mouvement du panneau interne 7 par rapport au panneau externe 8. Ce mouvement peut notamment correspondre à un déplacement ou à une déformation du panneau interne 7, causé par exemple par la pressurisation de la cabine.

Ainsi, la porte 1 est pourvue de deux éléments différents (le panneau interne 7 et le panneau externe 8) qui mettent en œuvre des fonctions différentes, à savoir une fonction aérodynamique pour le panneau externe 8 et des fonctions de pressurisation et d'ouverture et de fermeture pour le panneau interne 7. De plus, lesdits panneaux 7 et 8 sont liés élastiquement entre eux, ce qui permet un (léger) mouvement du panneau interne 7 sans mouvement du panneau externe 8.

Par exemple, lorsque la porte 1 est fermée et que la cabine de l'aéronef AC est pressurisée, le panneau interne 7 est susceptible de subir des déformations et/ou de se déplacer légèrement en raison de la différence de pression entre l'intérieur et l'extérieur de l'aéronef AC. Dans ce cas, la liaison élastique entre le panneau interne 7 et le panneau externe 8 est apte à absorber cette déformation et/ou ce déplacement du panneau interne 7 sans le transmettre au panneau externe 8.

En conséquence, comme représenté sur la figure 4 (qui est une vue agrandie de la partie de la figure 3 délimitée par un cadre B), un jeu 12 qui existe entre le panneau externe 8 et le fuselage 2 est réduit. Ce jeu 12 correspond à un espacement entre un bord 2A du fuselage 2 et un bord 13 du panneau externe 8. Plus précisément, le bord 2A correspond au contour du fuselage 2 délimitant le logement 10 dans lequel le panneau externe 8 est destiné à être logé quand la porte 1 est fermée. En outre, le bord 13 correspond à la périphérie externe du panneau externe 8.

Le jeu 12 est un jeu de fonctionnement entre le panneau externe 8 et le fuselage 2. De préférence, le jeu 12 correspond à une distance entre les bords 2A et 13 qui est comprise entre 1 mm et 2 mm. Un tel jeu 12 réduit permet de limiter significativement la traînée au niveau de la surface externe du fuselage 2 et donc d'améliorer les performances aérodynamiques de l'aéronef AC. Cette amélioration est encore plus importante dans le cas d'aéronefs spécifiques, par exemple de type aile volante, sur lesquels les portes de fuselage sont intégrées dans des surfaces externes présentant un angle non nul par rapport à la direction de l'écoulement d'air.

En outre, la porte 1 telle que décrite ci-dessus, permet au panneau externe 8 d'être plaqué contre l'encadrement 3 lorsque la porte 1 est fermée, de manière à éviter la présence d'une petite cavité que l'on peut retrouver habituellement au niveau de l'interface entre une porte et un fuselage de certains aéronefs. L'absence de cette petite cavité permet de réduire la traînée au niveau de la surface externe du fuselage 2.

De plus, la porte 1 disposant du jeu 12 réduit permet d'augmenter le confort notamment pour les passagers dans la cabine de l'aéronef AC, en limitant le bruit causé par l'écoulement d'air au niveau dudit jeu 12.

Par ailleurs, la porte 1 présente une conception simplifiée, notamment en ce qui concerne des tolérances de ladite porte 1. En effet, la fonction de pressurisation est destinée à être assurée par le panneau interne 7 seul. Aussi, le panneau interne 7 doit être soumis à des tolérances strictes liées à ladite pressurisation et le panneau externe 8 n'est, quant à lui, pas soumis à de telles tolérances strictes. Cela permet notamment de réduire, et donc de simplifier, des chaînes de cotes de la porte 1. De même, seul le panneau interne 7 doit être soumis à des réglages au sol particuliers, liés aux déformations qu'il est susceptible de subir à cause de la pressurisation. Cela permet de simplifier l'installation de la porte 1.

En outre, le panneau interne 7 et le panneau externe 8 sont des éléments distincts, et il est donc possible de prévoir pour chacun d'eux des formes légèrement variées. Leurs formes peuvent donc être décorrélées l'une de l'autre. Par exemple, le panneau interne 7 peut présenter une forme avec une courbure particulièrement adaptée pour répartir les efforts dus à la pressurisation de la cabine, notamment une forme en double courbure, et le panneau externe 8 peut présenter une autre forme indépendante de ladite pressurisation, ce qui laisse une plus grande liberté de conception. Par exemple, le panneau externe 8 peut présenter une forme ovoïde permettant de réduire les effets habituellement générés par les angles de portes.

Par ailleurs, le panneau externe 8 étant distinct du panneau interne 7, il peut assurer une protection contre des chocs. En effet, le panneau externe 8 peut être configuré pour résister à des chocs ou impacts particuliers, par exemple ceux causés par des oiseaux. De plus, le panneau externe 8 peut, par exemple, être déformé par un choc sans que cela ait d'effet sur le panneau interne 7 et de conséquences sur la pressurisation de la cabine.

Dans un mode de réalisation particulier, la porte 1 comporte une pluralité d'éléments élastiques 32 agencés entre le panneau externe 8 et le panneau interne 7. Ces éléments élastiques 32 sont aptes à lier élastiquement le panneau externe 8 au panneau interne 7. Ils peuvent correspondre à des éléments élastiques usuels réalisés en matériau métallique ou en matériau composite.

Dans une réalisation particulière de ce mode de réalisation, le panneau externe 8 et le panneau interne 7 présentent une forme sensiblement rectangulaire. De plus, la porte 1 comporte au moins quatre éléments élastiques 32 agencés respectivement aux quatre coins de ladite forme rectangulaire du panneau externe 8 et du panneau interne 7.

Dans un mode de réalisation préféré représenté sur la figure 5, les éléments élastiques 32 correspondent à des ressorts à lame 14. La figure 5 permet d'illustrer l'agencement d'un ressort à lame 14 dans un coin de la forme rectangulaire du panneau externe 8 et du panneau interne 7. La porte 1 comporte un ressort à lame 14 agencé de façon similaire à chacun des trois autres coins.

Chaque ressort à lame 14 présente deux extrémités, une extrémité 14A à œil et une extrémité 14B. L'extrémité 14A à œil est montée autour d'un pion 15 prévu sur une plaquette liée à la face 8A du panneau externe 8. L'extrémité libre 14B, quant à elle, est fixée sur une attache 16 prévue sur la face 7B du panneau interne 7. Les ressorts à lame 14 ainsi agencés permettent de lier élastiquement le panneau externe 8 au panneau interne 7, tel que décrit précédemment. Par ailleurs, les ressorts à lame 14 permettent également de supporter le panneau externe 8. Ces ressorts à lame 14 sont aptes en outre à assurer une fonction de "fusible géométrique" permettant de réduire la chaîne de cotes entre le panneau externe 8 et l'encadrement 3. De plus, en étant associées à une fonction d'auto centrage assurée par une pièce de centrage 22 précisée ci-dessous, elles participent à la réduction du jeu 12.

Dans une réalisation préférée, les ressorts à lame 14 sont réalisés en matériau composite. L'espace libre 11 entre le panneau interne 7 et le panneau externe 8 n'étant pas pressurisé, il peut être soumis aux conditions à l'extérieur de l'aéronef AC, en particulier à des variations de températures. Les ressorts à lame 14 en matériau composite permettent d'éviter des variations de propriétés mécaniques susceptibles d'être causées par ces variations de températures. De plus, les ressorts à lame 14 sont plus facilement réalisables en matériau composite par rapport à d'autres types d'éléments élastiques.

Comme représenté de la figure 6A à la figure 6D, le panneau interne 7 est apte à être déplacé relativement au panneau externe 8 de manière à pouvoir être approché dudit panneau externe 8 (comme illustré par une flèche D). Il est également apte à être déplacé en étant écarté dudit panneau externe 8 (dans le sens opposé à celui de la flèche D). En effet, le déplacement du panneau interne 7 par rapport au panneau externe 8 est prévu non seulement pour permettre des mouvements du panneau interne 7 pressurisé comme décrit précédemment, mais également pour ouvrir et fermer la porte 1. Un exemple d'une telle ouverture de la porte 1 est détaillé dans la suite de la description.

Dans un mode de réalisation particulier, le panneau interne 7 est configuré pour pouvoir être déplacé selon un mouvement de translation. Toutefois, dans d'autres modes de réalisation, il peut être configuré pour être déplacé selon d'autres mouvements usuels. Le panneau interne 7 peut être déplacé manuellement par un opérateur ou de manière assistée par des mécanismes de déplacement usuels (non représentés).

Comme représenté de la figure 6A à la figure 6D, la porte 1 comporte des systèmes de guidage 17 agencés entre le panneau interne 7 et le panneau externe 8. Dans un mode de réalisation particulier, chaque système de guidage 17 comporte des rails 18A agencés sur le panneau interne 7 et un coulisseau 18B agencé sur le panneau externe 8. Les rails 18A et le coulisseau 18B sont configurés pour coopérer ensemble de sorte que le coulisseau 18B guide lesdites rails 18A lorsque le panneau interne 7 est déplacé relativement au panneau externe 8.

Le panneau interne 7 est configuré pour pouvoir être déplacé en étant approché du panneau externe 8, comme illustré par la flèche D sur la figure 6C, de manière à venir au contact dudit panneau externe 8. Plus précisément, la face 7B du panneau interne 7 est configurée pour pouvoir venir au contact, au moins partiellement, de la face 8A du panneau externe 8. Le panneau interne 7, ainsi au contact du panneau externe 8, est apte à pousser ce dernier vers l'extérieur de l'aéronef AC pour ouvrir la porte 1. A l'inverse, le panneau interne 7 est également configuré pour pouvoir être déplacé en étant écarté du panneau externe 8. Les éléments élastiques 32 liant le panneau interne 7 au panneau externe 8 permettent de tirer ledit panneau externe 8 vers l'intérieur de l'aéronef AC pour fermer la porte 1.

Dans un mode de réalisation particulier, représentée de la figure 3 à la figure 5, la porte 1 comporte des éléments de butée entre le panneau interne 7 et le panneau externe 8. Ces éléments de butée correspondent à un bord 19 situé sur la face 7B du panneau interne 7 et un bord 20 situé sur la face 8A du panneau externe 8. Les bords 19 et 20 s'étendent dans l'espace libre 11 de façon saillante et en regard l'un de l'autre. Ils présentent notamment des formes adaptées pour venir au contact l'un de l'autre de manière à permettre au panneau interne 7, lorsqu'il est déplacé vers le panneau externe 8, de pousser ce dernier.

Par ailleurs, dans un mode de réalisation particulier représenté schématiquement sur la figure 1, le panneau externe 8 est pourvu d'une trappe 21 d'accès. La trappe 21 est pratiquée au travers du panneau externe 8 et elle destinée à accéder au panneau interne 7 pour pouvoir actionner une poignée (non représentée) du panneau interne 7. La poignée du panneau interne 7 permet d'ouvrir et de fermer la porte 1 depuis l'extérieur de l'aéronef AC.

Dans le mode de réalisation représenté de la figure 3 à la figure 5, le panneau externe 8 comporte également la pièce de centrage 22 agencée sur toute la périphérie dudit panneau externe 8. La pièce de centrage 22 qui est destinée à assurer une fonction d'auto centrage est fixée sur la face 8A du panneau externe 8 et comprend une face 23 de contact orientée vers l'intérieur de l'aéronef AC. De plus, l'encadrement 3 comporte, au niveau de la périphérie de la surface 5, une face 24 complémentaire (orientée vers l'extérieur de l'aéronef AC) complémentaire de la face 23. Les faces 23 et 24 sont configurées pour coopérer en venant au contact l'une de l'autre lorsque la porte 1 est fermée.

De préférence, comme représenté de la figure 3 à la figure 5, la face 23 de la pièce de centrage 22 et la face 24 de l'encadrement 3 sont configurées de sorte que le contact entre elles corresponde à un contact tronconique. En effet, les faces 23 et 24 sont inclinées l'une par rapport à l'autre de manière à réaliser ledit contact tronconique lorsque la porte 1 est fermée. A titre d'exemple, la face 24 peut correspondre à un chanfrein apte à recevoir la pièce de centrage 22. En outre, la pièce de centrage 22 peut être réalisée dans un matériau déformable de manière à pouvoir épouser la forme de la face 24 lorsque la porte 1 est fermée. La pièce de centrage 22, coopérant ainsi avec l'encadrement 3, est apte à assurer un centrage de la porte 1 dans ledit encadrement 3.

De plus, la pièce de centrage 22 peut correspondre à un élément de joint usuel, apte à assurer le centrage décrit ci-dessus. Elle permet ainsi d'assurer également une fonction d'étanchéité par rapport à l'extérieur lorsque la porte 1 est fermée.

Dans un mode de réalisation particulier, représenté de la figure 3 à la figure 5, le panneau interne 7 de la porte 1 comporte également un joint 25 agencé sur la périphérie dudit panneau interne 7. Le joint 25 est apte à venir au contact d'un bord 26 de la surface 5 de l'encadrement 3 lorsque la porte 1 est fermée. Le joint 25 et le bord 26 ainsi en contact sont aptes à créer une étanchéité de la porte 1 pour la pressurisation de la cabine de l'aéronef AC. Plus particulièrement, cette étanchéité concerne uniquement le panneau interne 3 de sorte que le panneau externe 8 et l'espace libre 11 ne sont pas pressurisés.

Dans un mode de réalisation particulier, la porte 1 comporte un système de chauffage usuel (non représenté) permettant de réaliser un chauffage entre le panneau interne 7 et le panneau externe 8. Par exemple, il peut s'agir d'un élément chauffant ou d'une arrivée d'air chaud. Un tel système de chauffage est notamment apte à dégivrer l'espace libre 11 et/ou la pièce de centrage 22.

Par ailleurs, comme représenté de la figure 1 à la figure 4, la partie de fuselage 4, comprenant l'encadrement 3 et la porte 1 comporte de plus un système de verrouillage. Ce système de verrouillage est apte à verrouiller la porte 1 de manière à la maintenir fermée, et inversement à déverrouiller ladite porte 1 de manière à la libérer pour permettre son ouverture. Plus précisément, le système de verrouillage comprend une pluralité de loquets 27 agencés dans l'épaisseur de la porte 1 et répartis au moins sur une partie de son contour.

De préférence, les loquets 27 correspondent à des loquets en forme de « C » (« C-Latch » en anglais). Comme représenté sur la figure 3 et la figure 4, chacun des loquets 27 comporte une borne 28 fixe agencée sur la surface 5 de l'encadrement 3, et un verrou 29 mobile agencé sur le panneau interne 7. Le verrou 29 est notamment configuré pour pouvoir pivoter comme indiqué par une flèche F sur la figure 4. Le verrou 29 comporte une extrémité 30 en forme de crochet (ou de « C ») configurée pour coopérer avec une extrémité 31 de la borne 28. En particulier, l'extrémité 30 est apte à bloquer le déplacement de la porte 1 lorsque le verrou 29 est pivoté dans une position verrouillée (figure 3) et à libérer le déplacement de la porte 1 vers l'extérieur de l'aéronef AC lorsque le verrou 29 est pivoté dans une position déverrouillée (figure 4).

Ainsi, l'ouverture et la fermeture de la porte 1 comportant les loquets 27 sont simplifiées. En effet, les loquets 27 et la configuration de la porte 1 permettent un désengagement et un engagement de ladite porte 1 ne nécessitant pas de mouvement de levée de ladite porte. Le désengagement et l'engagement correspondent à des mouvements de la porte 1 pour, respectivement, désengager et engager les verrous 29 dans les bornes 28 de manière à pouvoir réaliser le verrouillage ou le déverrouillage de ladite porte 1. Ce mouvement est habituellement réalisé à l'aide d'un mécanisme de levée comme un vérin et consiste à lever la porte 1 de quelques centimètres. La porte 1 permet de réaliser le désengagement et l'engagement sans être levée. Elle ne nécessite donc pas de mécanisme de levée, ce qui représente un gain en terme d'encombrement et de masse.

La porte 1, telle que décrite ci-dessus, peut être ouverte et fermée en étant amenée successivement dans différentes positions : la position fermée P1 représentée sur la figure 6A et la figure 6B, la position d'ouverture P2 représentée sur la figure 6C et la position ouverte P3 représentée sur la figure 6D.

Dans la position fermée P1 (figure 6A et figure 6B), la porte 1 ferme hermétiquement l'ouverture 6 de l'encadrement 3 de manière à pouvoir réaliser la pressurisation de la cabine. Dans cette position fermée P1, le panneau interne 7 est amené dans l'ouverture 6 en étant plaqué contre le bord 26 de l'encadrement 3 et verrouillée à l'aide de la pluralité de loquets 27. En outre, le panneau externe 8 est logé dans le logement 10 en étant plaqué contre l'encadrement 3. Le plaquage du panneau externe 8 contre l'encadrement 3 est réalisé par la liaison élastique entre le panneau interne 7 et le panneau externe 8. En effet, comme représenté sur la figure 5, les ressorts à lame 14 sont aptes à tirer le panneau externe 8 vers l'intérieur de l'aéronef et à le maintenir fermement contre l'encadrement 3. Le panneau externe 8 ainsi plaqué est configuré de sorte que sa face 8B externe soit affleurante à la surface externe du fuselage 2.

Pour ouvrir la porte 1, les loquets 27 sont déverrouillés de manière à libérer le déplacement de ladite porte 1. La porte 1 est ensuite poussée vers l'extérieur de l'aéronef AC dans la position d'ouverture P2 (figure 6C) dans laquelle elle ouvre l'ouverture 6. Le panneau interne 7 est alors déplacé en étant approché du panneau externe 8. Dans un premier temps, la liaison élastique entre le panneau interne 7 et le panneau externe 8 absorbe le déplacement du panneau interne 7. Le panneau interne 7 s'approche alors du panneau externe 8 en réduisant l'espace libre 11 entre eux. Dans un second temps, le panneau interne 7 vient au contact du panneau externe 8 et l'entraîne avec lui en le poussant vers l'extérieur de l'aéronef AC.

Une fois que la porte 1 est complètement déplacée vers l'extérieur de l'aéronef AC, elle se trouve dans la position ouverte P3 (figure 6D) dans laquelle elle permet le passage au travers de l'ouverture 6, par exemple le passage de passagers de l'aéronef AC. La porte 1 peut ensuite être refermée en suivant le cheminement inverse de celui de l'ouverture.

La porte 1 de la partie de fuselage 4 de l'aéronef AC, comportant le panneau externe 8 lié élastiquement au panneau interne 7, telle que décrite ci-dessus, présente de nombreux avantages. En particulier :
- elle permet de dissocier la fonction aérodynamique assurée par le panneau externe 8 des fonctions de pressurisation et d'ouverture et de fermeture de ladite porte 1 assurée par le panneau interne 7 ;
- elle permet de réduire le jeu 12 existant entre le fuselage 2 et le panneau externe 8 ;
- elle permet de réduire la traînée au niveau de sa surface externe ;
- elle permet d'améliorer les performances aérodynamiques de l'aéronef AC ;
- elle présente une conception qui est simplifiée, notamment en terme de chaînes de cotes ;
- elle présente une installation simplifiée, notamment en terme de réglages au sol ;
- elle permet de réduire le bruit causé par l'écoulement d'air sur sa surface externe ; et
- elle permet d'assurer une protection contre les chocs et/ou impacts sans conséquences pour la pressurisation de la cabine.

## Revendications

1. Porte de fuselage d'aéronef, ladite porte (1) comportant un panneau interne (7) mobile destiné à être soumis à une pressurisation,
**caractérisée en ce qu'**elle comporte, de plus, un panneau externe (8) aérodynamique, ledit panneau externe (8) étant agencé sur une face (7B) dite externe dudit panneau interne (7) en couvrant la surface de ladite face externe (7B) et étant lié élastiquement audit panneau interne (7) de manière à former un espace libre (11) interne entre ledit panneau interne (7) et ledit panneau externe (8), le panneau interne (7) étant apte à être déplacé relativement au panneau externe (8).

2. Porte selon la revendication 1,
**caractérisée en ce qu'**elle comporte au moins une pluralité d'éléments élastiques (32) agencés entre le panneau externe (8) et le panneau interne (7), lesdits éléments élastiques (32) étant aptes à lier élastiquement ledit panneau externe (8) audit panneau interne (7).

3. Porte selon la revendication 2,
**caractérisée en ce que** le panneau externe (8) et le panneau interne (7) présentent, chacun, une forme sensiblement rectangulaire et **en ce que** la porte (1) comporte au moins quatre éléments élastiques (32) agencés respectivement aux quatre coins de ladite forme rectangulaire du panneau externe (8) et du panneau interne (7).

4. Porte selon l'une des revendications 2 et 3,
**caractérisée en ce que** les éléments élastiques (32) correspondent à des ressorts à lame (14).

5. Porte selon l'une des revendications 1 à 4,
**caractérisé en ce que** le panneau interne (7) est apte à être déplacé relativement au panneau externe (8) pour être approché ou écarté dudit panneau externe (8), ledit panneau interne (7) étant apte à :
- pousser le panneau externe (8) lorsqu'il est approché dudit panneau externe (8), en venant, au moins en partie, au contact dudit panneau externe (8) ; et
- tirer le panneau externe (8) avec lui lorsqu'il est écarté dudit panneau externe (8).

6. Porte selon l'une quelconque des revendications précédentes, **caractérisé en ce que** le panneau externe (8) est pourvu d'au moins une trappe (21) d'accès destinée à permettre d'accéder au panneau interne (7).

7. Partie de fuselage d'aéronef,
**caractérisée en ce qu'**elle comporte au moins une porte (1) selon l'une quelconque des revendications 1 à 6 et un encadrement (3) de porte recevant ladite porte (1).

8. Partie de fuselage selon la revendication 7,
**caractérisée en ce que** le panneau externe (8) comporte au moins une pièce de centrage (22) agencée sur au moins une partie de la périphérie dudit panneau externe (8), ladite pièce de centrage (22) comprenant une face (23) dite de contact configurée pour coopérer avec une face (24) dite complémentaire de l'encadrement (3), ladite face (23) de contact étant destinée à venir au contact de ladite face (24) complémentaire lorsque la porte (1) est dans une position fermée (P1).

9. Partie de fuselage selon la revendication 8,
**caractérisée en ce que** la face de contact (23) de la pièce de centrage (22) et la face complémentaire (24) de l'encadrement (3) sont configurées de sorte que le contact entre ladite face de contact (23) et ladite face complémentaire (24) corresponde à un contact tronconique.

10. Partie de fuselage selon l'une quelconque des revendications 7 à 9, **caractérisé en ce que** le panneau interne (7) de la porte (1) comporte au moins un joint (25) agencé sur la périphérie dudit panneau interne (7), ledit joint (25) étant apte à venir au contact d'un bord (26) de l'encadrement (3) lorsque la porte (1) est dans une position fermée (P1).

11. Partie de fuselage selon l'une quelconque des revendications 7 à 10, **caractérisé en ce que** la porte comporte une pluralité de loquets (27) aptes à verrouiller ou à libérer un déplacement du panneau interne (7), par rapport audit encadrement (3) lorsque la porte (1) est dans une position fermée (P1).

12. Aéronef,
**caractérisé en ce qu'**il comporte au moins une partie de fuselage (4) selon l'une quelconque des revendications 7 à 11.

## Patentansprüche

1. Rumpftür eines Luftfahrzeugs, wobei die Tür (1) eine bewegliche interne Platte (7) umfasst, die dazu bestimmt ist, einer Druckbeaufschlagung unterzogen zu werden,
**dadurch gekennzeichnet, dass** sie zusätzlich eine aerodynamische externe Platte (8) umfasst, wobei die externe Platte (8) auf einer sogenannten externen Fläche (7B) der internen Platte (7) angeordnet ist, indem die Oberfläche der externen Fläche (7B) bedeckt und mit der internen Platte (7) auf eine Weise elastisch verbunden wird, um einen internen freien Raum (11) zwischen der internen Platte (7) und der externen Platte (8) zu bilden, wobei die interne Platte (7) in der Lage ist, relativ zu der externen Platte (8) verschoben zu werden.

2. Tür nach Anspruch 1,
**dadurch gekennzeichnet, dass** sie mindestens eine Vielzahl von elastischen Elementen (32) umfasst, die zwischen der externen Platte (8) und der internen Platte (7) angeordnet sind, wobei die elastischen Elemente (32) in der Lage sind, die externe Platte (8) elastisch mit der internen Platte (7) zu verbinden.

3. Tür nach Anspruch 2,
**dadurch gekennzeichnet, dass** die externe Platte (8) und die interne Platte (7) jeweils eine im Wesentlichen rechteckige Form aufweisen, und dadurch, dass die Tür (1) mindestens vier elastische Elemente (32) umfasst, die jeweils an den vier Ecken der rechteckigen Form der externen Platte (8) und der internen Platte (7) angeordnet sind.

4. Tür nach einem der Ansprüche 2 und 3,
**dadurch gekennzeichnet, dass** die elastischen Elemente (32) Blattfedern (14) entsprechen.

5. Tür nach einem der Ansprüche 1 bis 4,
**dadurch gekennzeichnet, dass** die interne Platte (7) in der Lage ist, relativ zu der externen Platte (8) verschoben zu werden, um der externen Platte (8) angenähert oder von dieser beabstandet zu werden, wobei die interne Platte (7) in der Lage ist zum:
- Drücken der externen Platte (8), wenn sie der externen Platte (8) angenähert wird, indem sie mindestens zum Teil mit der externen Platte (8) in Kontakt kommt; und
- Ziehen der externen Platte (8) mit ihr, wenn sie von der externen Platte (8) beabstandet wird.

6. Tür nach einem der vorstehenden Ansprüche,
**dadurch gekennzeichnet, dass** die externe Platte (8) mit mindestens einer Zugangsluke (21) versehen ist, die dazu bestimmt ist, zu gestatten, auf die interne Platte (7) zuzugreifen.

7. Rumpfteil eines Luftfahrzeugs,
**dadurch gekennzeichnet, dass** es mindestens eine Tür (1) nach einem der Ansprüche 1 bis 6 und eine Türeinrahmung (3), die die Tür (1) aufnimmt, umfasst.

8. Rumpfteil nach Anspruch 7,
**dadurch gekennzeichnet, dass** die externe Platte (8) mindestens ein auf mindestens einem Teil des Umfangs der externen Platte (8) angeordnetes Zentrierstück (22) umfasst, wobei das Zentrierstück (22) eine sogenannte Kontaktfläche (23) umfasst, die konfiguriert ist, um mit einer sogenannten komplementären Fläche (24) der Einrahmung (3) zusammenzuwirken, wobei die Kontaktfläche (23) dazu bestimmt ist, mit der komplementären Fläche (24) in Kontakt zu kommen, wenn die Tür (1) in einer geschlossenen Position (P1) vorliegt.

9. Rumpfteil nach Anspruch 8,
**dadurch gekennzeichnet, dass** die Kontaktfläche (23) des Zentrierstücks (22) und die komplementäre Fläche (24) der Einrahmung (3) derart konfiguriert sind, dass der Kontakt zwischen der Kontaktfläche (23) und der komplementären Fläche (24) einem Kegelstumpfkontakt entspricht.

10. Rumpfteil nach einem der Ansprüche 7 bis 9,
**dadurch gekennzeichnet, dass** die interne Platte (7) der Tür (1) mindestens ein Verbindungsstück (25) umfasst, das an dem Umfang der internen Platte (7) angeordnet ist, wobei das Verbindungsstück (25) in der Lage ist, mit einem Rand (26) der Einrahmung (3) in Kontakt zu kommen, wenn die Tür (1) in einer geschlossenen Position (P1) vorliegt.

11. Rumpfteil nach einem der Ansprüche 7 bis 10,
**dadurch gekennzeichnet, dass** die Tür eine Vielzahl von Verriegelungen (27) umfasst, die in der Lage sind, eine Verschiebung der internen Platte (7) in Bezug auf die Einrahmung (3) zu sperren oder freizugeben, wenn die Tür (1) in einer geschlossenen Position (P1) vorliegt.

12. Luftfahrzeug,
**dadurch gekennzeichnet, dass** es mindestens ein Rumpfteil (4) nach einem der Ansprüche 7 bis 11 umfasst.

## Claims

1. An aircraft fuselage door, said door (1) comprising a movable internal panel (7) intended to be subjected to pressurization,
**characterized in that** it further includes an aerodynamic external panel (8), said external panel (8) being arranged on a face (7B) referred to as the external face of said internal panel (7), covering the surface of said external face (7B) and being resiliently connected to said internal panel (7) in such a way as to form an internal free space (11) between said internal panel (7) and said external panel (8), the internal panel (7) being adapted to be moved relative to the external panel (8).

2. The door as claimed in claim 1,
**characterized in that** it includes at least a plurality of resilient elements (32) arranged between the external panel (8) and the internal panel (7), said resilient elements (32) being adapted to resiliently connect said external panel (8) to said internal panel (7).

3. The door as claimed in claim 2,
**characterized in that** the external panel (8) and the internal panel (7) each have a substantially rectangular shape and **in that** the door (1) includes at least four resilient elements (32) arranged respectively in the four corners of said rectangular shape of the external panel (8) and of the internal panel (7).

4. The door as claimed in either of claims 2 and 3,
**characterized in that** the resilient elements (32) correspond to leaf springs (14).

5. The door as claimed in one of claims 1 to 4,
**characterized in that** the internal panel (7) is adapted to be moved relative to the external panel (8) so as to be moved toward or away from said external panel (8), said internal panel (7) being adapted to:
- push the external panel (8) when it is moved toward said external panel (8), coming into contact, at least partially, with said external panel (8); and
- pull the external panel (8) with it when it is moved away from said external panel (8).

6. The door as claimed in any one of the preceding claims, **characterized in that** the external panel (8) has at least an access hatch (21) for allowing access to the internal panel (7).

7. An aircraft fuselage part,
**characterized in that** it includes at least a door (1) as claimed in any one of claims 1 to 6 and a door frame (3) receiving said door (1).

8. The fuselage part as claimed in claim 7,
**characterized in that** the external panel (8) includes at least a centering piece (22) arranged on at least a part of the periphery of said external panel (8), said centering piece (22) comprising a face (23) referred to as the contact face configured to interact with a face (24) referred to as the complementary face of the frame (3), said contact face (23) being intended to come into contact with said complementary face (24) when the door (1) is in a closed position (P1).

9. The fuselage part as claimed in claim 8,
**characterized in that** the contact face (23) of the centering piece (22) and the complementary face (24) of the frame (3) are configured such that the contact between said contact face (23) and said complementary face (24) corresponds to frustoconical contact.

10. The fuselage part as claimed in any one of claims 7 to 9, **characterized in that** the internal panel (7) of the door (1) includes at least a seal (25) arranged on the periphery of said internal panel (7), said seal (25) being adapted to come into contact with an edge (26) of the frame (3) when the door (1) is in a closed position (P1).

11. The fuselage part as claimed in any one of claims 7 to 10, **characterized in that** the door includes a plurality of latches (27) adapted to block or to allow a movement of the internal panel (7), relative to said frame (3), when the door (1) is in a closed position (P1).

12. An aircraft,
**characterized in that** it includes at least a fuselage part (4) as claimed in any one of claims 7 to 11.
